# EUROPEAN PATENT APPLICATION

(11) **EP 4 481 187 A1**
(43) Date of publication of application: **25.12.2024**
(21) Application number: 22926681.2
(22) Date of filing: 15.07.2022
(51) Int. Cl.: F03B 13/00, F03B 11/00

(54) **EFFICIENT HYDROKINETIC ROTATING DISC GENERATOR SET**

(30) Priority: 15.02.2022 CN 202210135471
(71) Applicant: Song, Zhanggen, Wuxi, Jiangsu 214212 (CN); Song, Suwei, Wuxi, Jiangsu 214212 (CN); Song, Zhicheng, Wuxi, Jiangsu 214212 (CN)
(72) Inventor: ZHANG, Jie, Wuxi, Jiangsu 214212 (CN); LI, Tianhong, Wuxi, Jiangsu 214212 (CN); SONG, Zhanggen, Wuxi, Jiangsu 214212 (CN); SONG, Suwei, Wuxi, Jiangsu 214212 (CN); SONG, Zhicheng, Wuxi, Jiangsu 214212 (CN)
(74) Representative: karo IP
(86) International application number: PCT/CN2022/105903
(87) International publication number: WO 2023/155375

(57) **Abstract**

An efficient hydrokinetic rotating disc generator set, comprising a buried load-bearing structure foundation (1), a transmission (2) being installed in the load-bearing structure foundation (1), an input shaft of the transmission (2) being connected to a load-bearing column (3) driven by hydraulic power to rotate, the transmission (2) being connected to a plurality of output shafts arranged in a balanced mode, and each output shaft being connected to a generator (4). The generator set improves the input rotational speed of generators by means of the transmission, so that power generation stability and output efficiency are improved.

## Description

### TECHNICAL FIELD

The present invention relates to hydroelectric power generation technologies, in particular, to a technology that can implement efficient power generation with a small height difference and without building a dam, and specifically, to an efficient hydrokinetic rotating disc generator set.

### BACKGROUND

It is well known that, hydroelectric generation is green energy with minimum pollution to the environment. However, existing hydroelectric power generation has a high hydrological requirement, and due to limitation of a water turbine structure, a dam needs to be built in a river channel to use an impact force formed by a difference between upstream and downstream water levels to drive the water turbine to rotate. This method requires large investment (for example, the Three Gorges Project) and has influence on the aquatic ecology, especially affecting the migration and reproduction of fishes, which affects the biodiversity and balanced development. Therefore, this method needs to be strictly controlled and repeatedly demonstrated. Although river channels of most regions in China have a specific flow rate, the geographical conditions and flow cannot meet standards for building hydropower stations. In some cases, the construction of hydropower stations may even not be allowed due to environmental protection requirements, resulting in waste of a large amount of water energy, and thermal power is a main culprit of air pollution. Therefore, Chinese Patent No. 2016100717954 discloses a new type hydroelectric power generation apparatus that can use water to generate power to supplement power supply without building or cutting off a river channel. Although this patent resolves the problem of a power input of a generator in hydroelectric power generation, this patent does not disclose technical problems such as how to improve the power generation efficiency and how to configure a generator set.

### SUMMARY

An objective of the present invention is to design an efficient hydrokinetic rotating disc generator set for the problem of low power generation efficiency of existing hydrokinetic rotating disc generator sets.

A technical solution of the present invention is as follows:
An efficient hydrokinetic rotating disc generator set is provided, including a buried load-bearing structure foundation 1, where a transmission 2 is installed in the load-bearing structure foundation 1, an input shaft of the transmission 2 is connected to a load-bearing column 3 driven by hydraulic power to rotate, the transmission 2 is connected to one or more output shafts arranged in a balanced mode, and each output shaft is connected to a generator 4.

The generator 4 includes a horizontal generator and a vertical generator.

The load-bearing structure foundation 1 is formed by a foundation and an annular load-bearing wall 5, a load-bearing ball or a load-bearing roller 8 configured to reduce frictional resistance of a driving member 7 is installed on the annular load-bearing wall 5, one end of the driving member 7 is connected to the load-bearing column 3, and the other end of the driving member is connected to a reversible water baffle 6.

The driving member 7 is of a rod structure or a disc structure, and a load-bearing inhaul cable 9 is added between the load-bearing column 2 and the driving member 7.

The water baffle 6 is placed in an annular water channel 10 to rotate as push of water flow, and a separating apparatus 13 is arranged between a water inlet 11 and a water outlet 12 of the annular water channel.

The separating apparatus 13 is formed by a separating wall higher than a water surface or a plurality of separating plates higher than a water surface.

Beneficial effects of the present invention are as follows:
In the present invention, the power generation efficiency can be greatly improved, an input rotational speed of each generator is improved through the transmission, so that the power generation stability and output efficiency are improved.

In the present invention, the output shafts are arranged in the balanced mode, which helps improve the rotation balance of the load-bearing column.

In the present invention, there is no need to build a dam, water resources are fully utilized without power, and no destructive influence is generated on the environment.

The present invention requires small investment and is flexible in building hydropower stations. The present invention can fully utilize big rivers and streams, enable each tributary to play its due role, and can also implement hydroelectric power generation through artificial water channel (groove) transformation.

A water flow speed is low, so that the present invention does not cause damage to fishes passing by, and the fishes can pass through the hydropower station through a rotation gap of the water blocking plate or the bottom of water no matter the fishes migrate back or swim downstream. Even if the fishes impact the water blocking plate, minimal damage is caused.

### BRIEF DESCRIPTION OF THE DRAWINGS

FIG. 1 is a main schematic structural view of the present invention.
FIG. 2 is a top view of FIG. 1.

### DETAILED DESCRIPTION

The following further describes the present invention with reference to the accompanying drawings and embodiments.

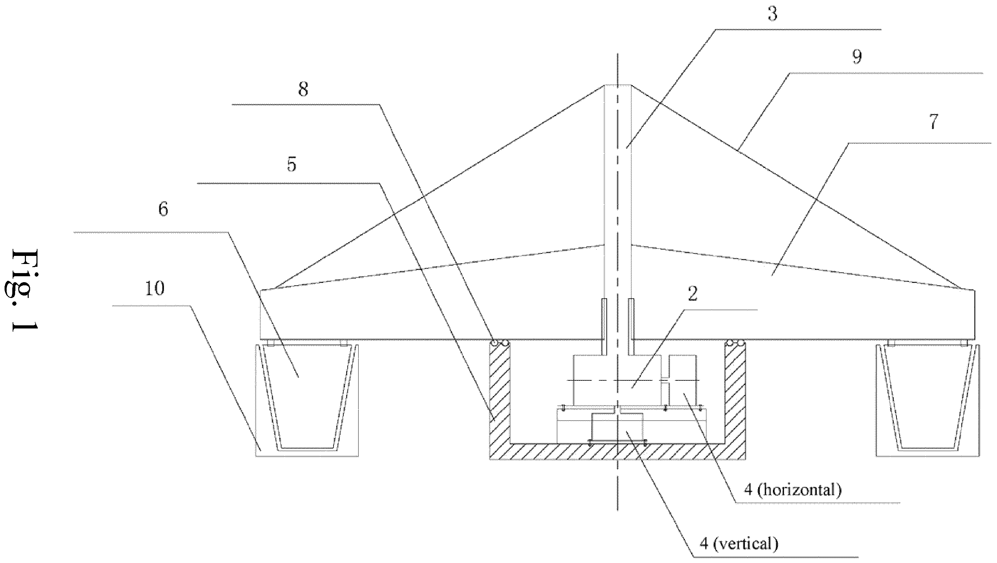

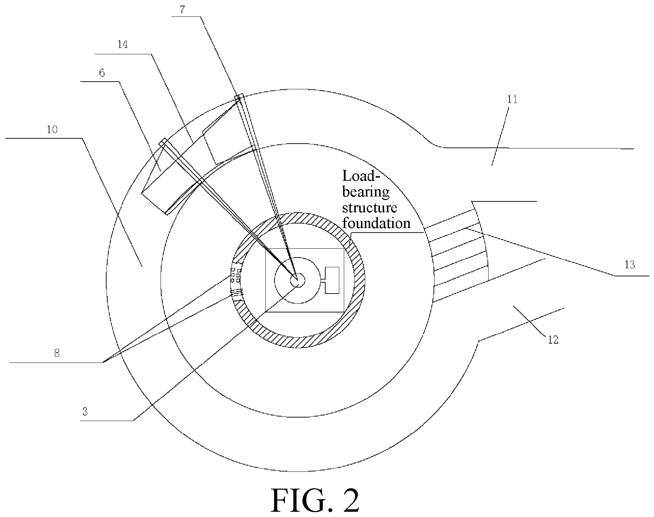

As shown in FIG. 1 and FIG. 2.

An efficient hydrokinetic rotating disc generator set is provided, including a buried load-bearing structure foundation 1. A transmission 2 is installed in the load-bearing structure foundation 1, where a conventional gear speed increasing box may be used as the transmission 2, and an input shaft of the transmission 2 is connected to a load-bearing column 3 driven by hydraulic power to rotate. The load-bearing column rotates to drive a vertical main shaft of the transmission to rotate, and outputs, through speed increasing and assignment of the transmission, by using one or more, and preferably, two to four horizontal (and/or vertical) output shafts. Each output shaft is connected to an input shaft of a corresponding generator 4 and drives the generator to rotate, where the generator 4 may be a horizontal generator or may be a vertical generator, as shown in FIG. 1. The load-bearing structure foundation 1 is formed by a foundation and an annular load-bearing wall 5, as shown in FIG. 2, a load-bearing ball or a load-bearing roller 8 configured to reduce frictional resistance of a driving member 7 is installed on the annular load-bearing wall 5, one end of the driving member 7 is connected to the load-bearing column 3, and the other end of the driving member is connected to a reversible water baffle 6. The driving member 7 may be of a rod structure or a disc structure, and a load-bearing inhaul cable 9 is added between the load-bearing column 2 and the driving member 7 to reduce pressure applied by the driving member 7 to the annular load-bearing wall 5, thereby reducing the frictional resistance between the driving member and the annular load-bearing wall. A structure of the water baffle 6 is the same as that in the related art. In this embodiment, the water baffle 6 is placed in an annular water channel 10 to rotate as push of water flow, and water baffles 6 may be further linked through an inhaul cable 14 when necessary. A separating apparatus 13 is arranged between a water inlet 11 and a water outlet 12 of the annular water channel, and the water inlet and the water outlet cannot intersect with each other and need to have a specific height difference. During a specific implementation, the separating apparatus 13 may be formed by a separating wall structure higher than a water surface or a plurality of separating plates higher than a water surface, as shown in FIG. 2.

Parts that are not involved in the present invention are all the same as those in the related art or may be implemented by using the related art.

## Claims

1. An efficient hydrokinetic rotating disc generator set, comprising a buried load-bearing structure foundation (1), wherein a transmission (2) is installed in the load-bearing structure foundation (1), an input shaft of the transmission (2) is connected to a load-bearing column (3) driven by hydraulic power to rotate, the transmission (2) is connected to one or more output shafts arranged in a balanced mode, and each output shaft is connected to a generator (4).

2. The efficient hydrokinetic rotating disc generator set according to claim 1, wherein the generator (4) comprises a horizontal generator and a vertical generator.

3. The efficient hydrokinetic rotating disc generator set according to claim 1, wherein the load-bearing structure foundation (1) is formed by a foundation and an annular load-bearing wall (5), a load-bearing ball or a load-bearing roller (8) configured to reduce frictional resistance of a driving member (7) is installed on the annular load-bearing wall (5), one end of the driving member (7) is connected to the load-bearing column (3), and the other end of the driving member is connected to a reversible water baffle (6).

4. The efficient hydrokinetic rotating disc generator set according to claim 1, wherein the driving member (7) is of a rod structure or a disc structure, and a load-bearing inhaul cable (9) is added between the load-bearing column (2) and the driving member (7).

5. The efficient hydrokinetic rotating disc generator set according to claim 1, wherein the water baffle (6) is placed in an annular water channel (10) to rotate as push of water flow, and a separating apparatus (13) is arranged between a water inlet (11) and a water outlet (12) of the annular water channel.

6. The efficient hydrokinetic rotating disc generator set according to claim 1, wherein the separating apparatus (13) is formed by a separating wall higher than a water surface or a plurality of separating plates higher than a water surface.
